# EUROPÄISCHE PATENTSCHRIFT

(11) **EP 1 189 950 B1**
(45) Veröffentlichungstag und Bekanntmachung des Hinweises auf die Patenterteilung: **12.05.2004**
(21) Anmeldenummer: 00942025.8
(22) Anmeldetag: 07.06.2000
(51) Int. Cl.: C08F 8/00, C08F 8/26, C08F 212/32, C08F 10/00, C08F 4/64

(54) **TRÄGERKATALYSATOR ZUR OLEFINPOLYMERISATION**
SUPPORT CATALYST FOR OLEFIN POLYMERIZATION
CATALYSEUR SUPPORT DE POLYMERISATION D'OLEFINES

(30) Priorität: 17.06.1999 DE 19927766
(43) Veröffentlichungstag der Anmeldung: 27.03.2002
(73) Patentinhaber: Basell Polyolefine GmbH, 50389 Wesseling (DE); MAX-PLANCK-GESELLSCHAFT ZUR FÖRDERUNG DER WISSENSCHAFTEN E.V., 14195 Berlin (DE)
(72) Erfinder: KOCH, Matthias, D-65205 Wiesbaden (DE); STORK, Martin, D-59075 Hamm (DE); KLAPPER, Markus, D-55128 Mainz (DE); MÜLLEN, Klaus, D-50939 Köln (DE); GREGORIUS, Heike, D-56288 Bubach (DE); RIEF, Ursula, D-68542 Heddesheim (DE)
(86) Internationale Anmeldenummer: PCT/EP2000/005256
(87) Internationale Veröffentlichungsnummer: WO 2000/078823

(56) Entgegenhaltungen:
- WO-A-99/60035
- STORK M ET AL: "ETHYLENE POLYMERIZATION USING CROSSLINKED POLYSTYRENE AS SUPPORT FOR ZIRCONOCENE DICHLORIDE/METHYLALUMINOXANE" MACROMOLECULAR: RAPID COMMUNICATIONS,DE,WILEY VCH, WEINHEIM, Bd. 20, Nr. 4, April 1999 (1999-04), Seiten 210-213, XP000835009 ISSN: 1022-1336
- KITAGAWA T ET AL: "Syndiospecific propene polymerization with polymer-supported metallocene catalyst" POLYMER,GB,ELSEVIER SCIENCE PUBLISHERS B.V, Bd. 38, Nr. 3, 1. Februar 1997 (1997-02-01), Seiten 615-620, XP004015334 ISSN: 0032-3861

## Beschreibung

Die vorliegende Erfindung betrifft einen Trägerkatalysator zur Olefinpolymerisation enthaltend
A) als Trägermaterial ein Copolymerisat aus mindestens den Monomereinheiten I, II und III,
   wobei die Monomereinheiten I solche der allgemeinen Formel (I) und die Monomereinheiten II solche der allgemeinen Formel (II) sind, 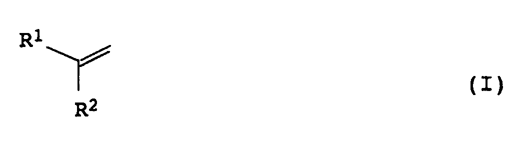 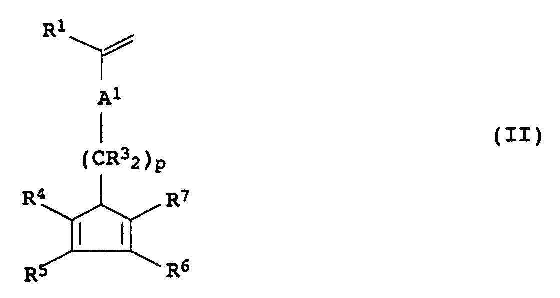 in denen die Variablen die folgende Bedeutung haben:
   - R¹: Wasserstoff, C₁-C₄-Alkyl oder Phenyl,
   - R²: substituiertes oder unsubstituiertes Aryl oder verzweigtes oder unverzweigtes Alkyl oder Alkenyl,
   - A¹: eine direkte chemische Bindung oder eine substituierte oder unsubstituierte Phenylengruppe,
   - R³: gleiche oder verschiedene Reste Wasserstoff, C₁-C₁₀-Alkyl oder substituiertes oder unsubstituiertes Phenyl,
   - p: eine ganze Zahl von 0 bis 8, und
   - R⁴ bis R⁷: Wasserstoff, C₁-C₁₀-Alkyl oder substituiertes oder unsubstituiertes Phenyl,
   und die Monomereinheiten III polare Gruppen aufweisen, sowie
B) mindestens einen Metallocenkomplex und
C) mindestens eine metalloceniumionenbildende Verbindung.

Weiterhin betrifft die Erfindung Verfahren zur Herstellung solcher Trägerkatalysatoren, als Trägermaterial geeignete Copolymerisate sowie verfahren zur Polymerisation von Olefinen in Gegenwart eines erfindungsgemäßen Katalysators.

Geträgerte Übergangsmetallkatalysatoren sind seit langem bekannt und werden beispielsweise zur Olefinpolymerisation eingesetzt. Die Aktivität und Produktivität dieser Katalysatoren hängt dabei wesentlich von ihrem Herstellverfahren ab. Als Trägermaterial für solche Übergangsmetallkatalysatoren werden üblicherweise vernetzte Polymere oder anorganische Trägermaterialien, wie beispielsweise Kieselgel eingesetzt. Beispiele solcher geträgerten Katalysatoren werden beispielsweise in WO 94/28034, in EP-A 295 312 sowie in WO 98/01481 beschrieben.

Bei der Fixierung von Metallocenen auf der Oberfläche anorganischer Materialien und der anschließenden Polymerisation können einige nachteilige Effekte auftreten. So ist es schwierig, die Katalysatorkomponente homogen auf der Oberfläche des porösen Trägermaterials zu verteilen. Im Verlauf der Polymerisation kommt es im allgemeinen zu einer Fragmentierung des Katalysators und des Trägermaterials. Aufgrund der inhomogenen Verteilung der Katalysatorkomponenten auf der Oberfläche des Trägers entstehen bei der Fragmentierung wiederum inhomogene Katalysatorpartikel, die einen nachteiligen Einfluß auf die Polymerisationsprodukte haben können.

Bei der Trägerung der Metallocene auf vernetzte Polymerisate tritt häufig das Problem auf, daß infolge eines unvollständigen Aufquellens der vernetzen Polymerisatpartikel ebenfalls nur eine inhomogene Verteilung der Metallocene im Träger erreicht wird.

Von S.B. Roscoe, J.M. Fréchet, J.M. Walzer und A.J. Dias, Sience 280, 1998, Seiten 270 - 273 wird ein Trägerkatalysator beschrieben, bei dem ein mit Divinylbenzol vernetztes, chlormethyliertes Polystyrol nacheinander mit einem sekundären Amin, einem Ammoniumsalz eines schwach koordinierenden Anions und einem neutralen Dialkylmetallocen umgesetzt wurde. Es wurde ein polymerisationsaktiver Katalysator erhalten. Allerdings war bei erhöhten Polymerisationstemperaturen die erhaltene Polymerisatmorphologie unbefriedigend und es konnte nur mit Hafnocenen polymerisiert werden.

A.G.M. Barrett und Y.R. de Miguel, Chem. Commun. 1998, Seiten 2079ff offenbarten einen Katalysator, bei dem ein peralkylierter Titanocenkomplex kovalent an einen Polystyrolträger gebunden wurde. Auch in der nicht vorveröffentlichten DE-A 198 21 949 wird ein Verfahren beschrieben, bei dem Metallocenkomplexe kovalent an einen Polystyrolträger angebunden sind. Für komplizierter aufgebaute Metallocene - wie sie beispielsweise für die stereoselektive Polymerisation von Propylen erforderlich sind - ist die entsprechende Synthese jedoch sehr aufwendig oder nicht mehr durchführbar.

Der vorliegenden Erfindung lag daher die Aufgabe zugrunde, Trägerkatalysatoren zu finden, welche die Nachteile des Standes der Technik nicht mehr aufweisen und eine homogene Verteilung der Katalysatorkomponenten auf dem Trägermaterial besitzen, die ohne größeren Aufwand mit einer Vielzahl von verschiedenen Metallocensystemen herstellbar sind und die auch bei erhöhter Polymerisationstemperatur eine gute Polymerisatmorphologie liefern.

Demgemäß wurde der eingangs definierte Trägerkatalysator zur Olefinpolymerisation gefunden. Weiterhin wurden Verfahren zur Herstellung solcher Trägerkatalysatoren, als Trägermaterial geeignete Copolymerisate sowie Verfahren zur Polymerisation von Olefinen in Gegenwart eines erfindungsgemäßen Katalysators gefunden.

Der erfindungsgemäße Trägerkatalysator zur Olefinpolymerisation enthält als Trägermaterial A) ein Copolymerisat, welches mindestens aus den Monomereinheiten I, II und III aufgebaut ist. Von diesen Monomereinheiten dient die Monomereinheit I als Grundgerüst des Trägermaterials. Die Monomereinheit II ermöglicht eine Vernetzung der Polymerketten durch eine Diels-Alder-Reaktion der Cyclopentadienylreste. Über die Monomereinheit III wird eine so ausreichende Polarität in das Copolymerisat A) eingebracht, daß die Aktivkomponenten B)und C) auf dem Trägermaterial fixiert werden, obwohl sie nicht kovalent angebunden sind.

Der Rest R¹ in den Monomeren I, II, oder III kann jeweils Wasserstoff, eine C₁-C₄-Alkylgruppe, also Methyl, Ethyl oder die verschiedenen Isomeren von Propyl oder Butyl, oder Phenyl sein. Bevorzugt ist R¹ jeweils Wasserstoff oder Methyl und insbesondere Wasserstoff.

Der Rest R² in der Formel (I) ist vorzugsweise substituiertes oder unsubstituiertes Phenyl, Pyrenyl, Naphthyl oder Alkenyl. Bevorzugte Monomere I sind Styrol, Butadien oder Isopren.

In der Formel (II) steht die Variable A¹ für eine direkte chemische Bindung oder eine substituierte oder unsubstituierte Phenylengruppe, bevorzugt ist A¹ eine direkte chemische Bindung oder eine p-Phenylengruppe.

Die Substituenten R³ in der Formel (II) können gleich oder verschieden sein und sind bevorzugt Wasserstoff, Methyl, Ethyl oder die verschiedenen Isomeren von Propyl oder Phenyl und insbesondere Wasserstoff oder Methyl.

Die Variable n in der Formel (II) ist vorzugsweise 0 oder 1.

Der Cyclopentadienylrest in der Formel (II) kann unsubstituiert sein. Dann sind die Reste R⁴ bis R⁷ jeweils Wasserstoff. Er kann jedoch auch 1- bis 4-fach substituiert sein. Als Substituenten R⁴ bis R⁷ kommen dann C₁-C₁₀-Alkylgruppen in Betracht, also Methyl, Ethyl sowie die verschiedenen Isomere von Propyl, Butyl, Pentyl, Hexyl, Heptyl, Octyl, Nonyl oder Decyl. Weiterhin kommen als Reste R⁴ bis R⁷ auch substituierte oder unsubstituierte Phenylreste in Betracht, darunter insbesondere unsubstituierte Phenylreste. Besonders bevorzugt sind die Cyclopentadienylreste in der Formel (II) allerdings unsubstituiert.

Besonders bevorzugte Monomereinheiten II sind solche in denen A¹ p-Phenylen, p gleich 1 und R³ sowie R⁴ bis R⁷ jeweils Wasserstoff sind oder solche in denen A¹ eine direkte Bindung, p gleich 1, R³ jeweils Methyl und R⁴ bis R⁷ jeweils Wasserstoff sind.

Die Monomereinheiten III sind dadurch gekennzeichnet, daß sie mit den Monomeren I und II bzw. mit Monomeren, die sich in die Monomereinheiten I und II umsetzen lassen, copolymerisiert werden können und daß sie polare Gruppen aufweisen.

Bevorzugte Monomereinheiten III sind Verbindungen gemäß der allgemeinen Formel (IIIa), 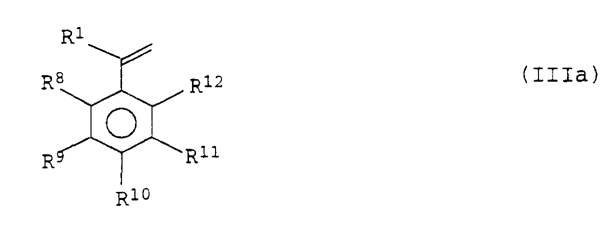 in der
- R⁸ bis R¹²: Wasserstoff, C₁-C₁₀-Alkyl, 5- bis 7-gliedriges Cycloalkyl, das seinerseits durch C₁-C₁₀-Alkyl substituiert sein kann, C₆-C₁₅-Aryl oder Arylalkyl sein kann, oder wobei
die Reste mit benachbarten Resten jeweils einen 5 bis 15 C-Atome aufweisenden gesättigten oder ungesättigten Ring bilden können,
wobei jedoch mindestens ein Rest R⁸ bis R¹² eine Gruppe der allgemeinen Formel (IV) ist, 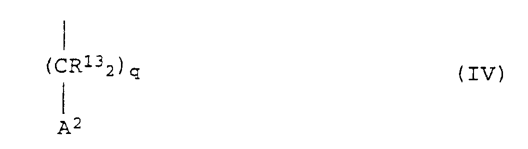 in der
- R¹³: gleiche oder verschiedene Reste Wasserstoff, C₁-C₁₀-Alkyl oder substituiertes oder unsubstituiertes Phenyl,
- q: eine ganze Zahl von 0 bis 8 und
- A²: eine Gruppe OR¹⁴, NR¹⁴R¹⁵, PR¹⁴R¹⁵, CN, COOR¹⁴ oder (O-(CH₂)_{q'})_{q''}-OR¹⁴, wobei R¹⁴ und R¹⁵ gleich oder verschieden sind und für Wasserstoff oder C₁-C₄-Alkyl stehen, und q' eine ganze Zahl von 1 bis 5 und q'' eine ganze Zahl von 1 bis 8 bedeutet,
ist.

Besonders bevorzugte Monomereinheiten der Formel (IIIa) sind solche, in denen ein bis drei Reste R⁸ bis R¹² eine Gruppe der allgemeinen Formel (IV) sind. Insbesondere sind auch Monomere der Formel (IIIa) bevorzugt, in denen nur ein Rest R⁸ bis R¹² eine Gruppe der allgemeinen Formel (IV) ist , wobei dann die weiteren Reste R⁸ bis R¹² Wasserstoff sind.

Bevorzugte Gruppen der allgemeinen Formel (IV) sind solche in denen q gleich 0 oder 1 und A² gleich OR¹⁴, und insbesondere Methoxy oder Hydroxy ist, ist. R¹³ ist bevorzugt Wasserstoff oder Methyl und q' ist bevorzugt 1, 2 oder 3. Bevorzugt sind auch Gruppen der allgemeinen Formel (IV) in denen q gleich 2, R¹³ Wasserstoff und A² Hydroxy oder (O-C₂H₄)_{q''}-OH ist. Weiterhin bevorzugt sind Gruppen mit A² gleich CN.

Von den Resten R⁸ bis R¹², die nicht eine Gruppe der allgemeinen Formel (IV) sind, sind außer Wasserstoff insbesondere C₁-C₄-Alkyl, Phenyl oder Tetramethylcyclopentadienyl bevorzugt.

Geeignete Monomereinheiten der Formel (IIIa) sind beispielsweise p-Methoxymethylstyrol, p-Hydroxystyrol, p-Methoxystyrol, (2-Hydroxyethyl)styrol, Trimethoxystyrol, (Dimethyl-hydroxymethyl)styrol oder (Methoxymethyl)(methoxy)styrol.

Weiterhin bevorzugte Monomereinheiten III sind Verbindungen gemäß der allgemeinen Formel (IIIb), 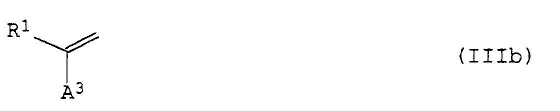 mit
- A³: COOR¹⁶ oder CN, wobei
- R¹⁶: für Wasserstoff oder C₁-C₁₀-Alkyl steht.

Zu nennen sind hier beispielsweise Acrylsäure- oder Methacrylsäureester oder -nitrile.

Als Monomereinheiten I, II oder III der Copolymerisate A) können auch jeweils Mischungen verschiedener Verbindungen der Formeln (I), (II), (IIIa) und/oder (IIIb) dienen. In den Copolymerisaten A) können auch beliebige weitere olefinische Comonomere enthalten sein, vorausgesetzt, sie interferieren nicht in störender Weise bei der Synthese der Copolymerisate. Vorzugsweise enthalten die Copolymerisate A) jedoch nur die Monomereinheiten I, II und III.

Die Mengenverhältnisse der Monomereinheiten I, II und III können in einem breiten Bereich variieren. Üblicherweise wird ein größerer Anteil an I eingesetzt. Der Anteil der Monomereinheiten II an der Gesamtmenge des Copolymerisats beträgt vorteilhafterweise 3 bis 30 Mol-%, bezogen auf die Gesamtmasse des Copolymerisats, besonders bevorzugt 10 bis 20 Mol-%. Der Anteil der Monomereinheiten III an der Gesamtmenge des Copolymerisats beträgt bevorzugt 10 bis 40 Mol-%, bezogen auf die Gesamtmasse des Copolymerisats und besonders bevorzugt 20 bis 30 Mol-%.

Die Herstellung der Copolymerisate A) kann durch Copolymerisation von Verbindungen der Formeln (I), (II) und (IIIa) und/oder (IIIb) bzw. von Verbindungen, die sich durch polymeranaloge Umsetzungen in die entsprechenden Monomereinheiten überführt werden können, erfolgen. Die Copolymerisation kann auf übliche, dem Fachmann bekannte Weise, beispielsweise radikalisch oder anionisch, erfolgen. Vorzugsweise erfolgt die Herstellung die Copolymerisate A) durch radikalische Polymerisation. Die Copolymerisate A) haben in der Regel Molmassen M_{w} (Gewichtsmittel) im Bereich von 15000 bis 70000 g/mol, bevorzugt 30000 bis 50000 g/mol. Die Breite der Molmassenverteilung Mₙ/M_{w} liegt in der Regel von 2 bis 3.

Während zum Einbringen der Monomereinheiten I in die Copolymerisate A) meist Monomere eingesetzt werden, die bereits die entsprechenden Strukturmerkmale aufweisen, werden zum Einbringen der Monomereinheiten II üblicherweise Monomere II' polymerisiert, die dann in polymeranaloger Reaktion in die Monomereinheiten II überführt werden. Die Monomere II' besitzen dann substituierbare Abgangsgruppen über die der Cyclopentadienring in die Monomereinheiten II eingeführt werden kann.

Als substituierbare Abgangsgruppen kommen beispielsweise nucleophil substituierbare Abgangsgruppen wie die Halogene, also Fluor, Chlor, Brom oder Jod, oder weitere dem Fachmann geläufige nucleophil substituierbare Abgangsgruppen wie Tosylat, Trifluoracetat, Acetat oder Azid in Betracht. Ein vorzugsweise eingesetztes Monomere II' ist p-(Chlormethyl)styrol.

Nach der Polymerisation können die nucleophil substituierbaren Abgangsgruppen der Monomere II' dann nach verschiedenen, dem Fachmann geläufigen Verfahren mit einer Cyclopentadienylverbindung umgesetzt werden. Beispielsweise kann die Cyclopentadienverbindung durch eine starke Base wie Butyllithium oder Natriumhydrid oder durch elementares Alkalimetall, wie beispielsweise Natrium, in das Cyclopentadienylanion überführt. Dieses Cyclopentadienylanion kann dann in einer nucleophilen Substitutionsreaktion die nucleophil substituierbare Abgangsgruppe ersetzen.

Es ist auch möglich Monomere II' mit Abgangsgruppen einzusetzen, die sich nach der Polymerisation in metallorganische funktionelle Gruppen überführen lassen. Beispiele für entsprechende metallorganische funktionelle Gruppen sind -Li, -MgX⁴, wobei X⁴ für Halogen, also Fluor, Chlor, Brom oder Jod, steht. Beispiele für solche Monomere II' sind p-Halogen-Styrole, vorzugsweise p-Bromstyrol, bei denen das Halogen durch die metallorganische funktionelle Gruppe substituiert werden kann. Es ist dann möglich, anschließend eine Umsetzung mit einer Fulvenverbindung durchzuführen, wodurch sich Monomereinheiten II bilden.

Geeignete Fulvenverbindungen tragen am Methylen-Kohlenstoff zwei gleiche oder verschiedene Reste C₁-C₄-Alkyl oder substituiertes oder unsubstituiertes Phenyl, wobei Methyl, Ethyl oder die verschiedenen Isomere von Propyl oder Phenyl und insbesondere Methyl bevorzugt sind. Ein besonders bevorzugtes Fulven IIIa ist Dimethylfulven.

Das Einbringen von Monomereinheiten III in die Copolymerisate A) kann durch die Verwendung entsprechend aufgebauter Monomere, beispielsweise solcher der Formeln (IIIb), erfolgen. Es ist jedoch auch hierbei möglich, Monomereinheiten III' zu polymerisieren und diese dann in polymeranalogen Umsetzungen in Monomereinheiten III zu überführen. Beispielsweise kann man halogenhaltige Monomere III' wie Chlormethylstyrol durch Umsetzung mit einem Methanolat in Methoxygruppen enthaltende Monomereinheiten III wie Methoxymethylstyrol überführen.

Weiterhin enthalten die erfindungsgemäßen Trägerkatalysatoren zur Olefinpolymerisation mindestens einen Metallocenkomplex B) der allgemeinen Formel (V) 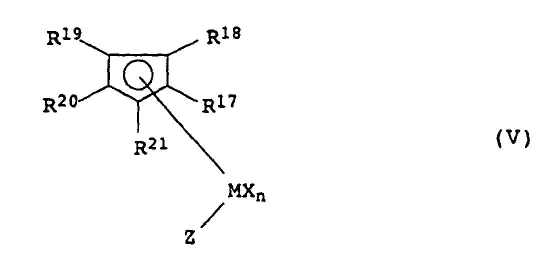 in der die Substituenten und Indizes folgende Bedeutung haben:
- M: Titan, Zirkonium, Hafnium, Vanadium, Niob, Tantal oder Chrom sowie Elemente der III. Nebengruppe des Periodensystems und der Lanthanoiden,
- X: Fluor, Chlor, Brom, Iod, Wasserstoff, C₁-C₁₀-Alkyl, C₆-C₁₅-Aryl, Alkylaryl mit 1 bis 10 C-Atomen im Alkylrest und 6 bis 20 C-Atomen im Arylrest, -OR²² oder -NR²²R²³,
- n: 1, 2 oder 3, wobei n der Wertigkeit von M minus der Zahl 2 entspricht,
wobei
- R²² und R²³: C₁-C₁₀-Alkyl, C₆-C₁₅-Aryl, Alkylaryl, Arylalkyl, Fluoralkyl oder Fluoraryl mit jeweils 1 bis 10 C-Atomen im Alkylrest und 6 bis 20 C-Atomen im Arylrest bedeuten und
die Reste X gleich oder verschieden sind,
- R¹⁷ bis R²¹: Wasserstoff, C₁-C₁₀-Alkyl, 5- bis 7-gliedriges Cycloalkyl, das seinerseits durch C₁-C₁₀-Alkyl substituiert sein kann, C₆-C₁₅-Aryl oder Arylalkyl, wobei auch zwei benachbarte Reste gemeinsam für 4 bis 15 C-Atome aufweisende gesättigte oder ungesättigte cyclische Gruppen stehen können, oder Si(R²⁴)₃ mit
- R²⁴: C₁-C₁₀-Alkyl, C₃-C₁₀-Cycloalkyl oder C₆-C₁₅-Aryl sein kann und
- Z: für 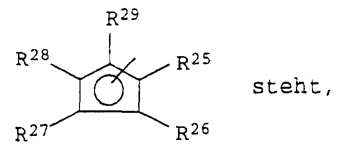
wobei die Reste
- R²⁵ bis R²⁹: Wasserstoff, C₁-C₁₀-Alkyl, 5- bis 7-gliedriges Cycloalkyl, das seinerseits durch C₁-C₁₀-Alkyl substituiert sein kann, C₆-C₁₅-Aryl oder Arylalkyl bedeuten und wobei auch zwei benachbarte Reste gemeinsam für 4 bis 15 C-Atome aufweisende gesättigte oder ungesättigte cyclische Gruppen stehen können, oder Si(R³⁰)₃ mit
- R³⁰: C₁-C₁₀-Alkyl, C₃-C₁₀-Cycloalkyl oder C₆-C₁₅-Aryl bedeuten,
oder wobei die Reste R²⁰ und Z gemeinsam eine Gruppierung -R³¹-A-bilden, in der
- R³¹: 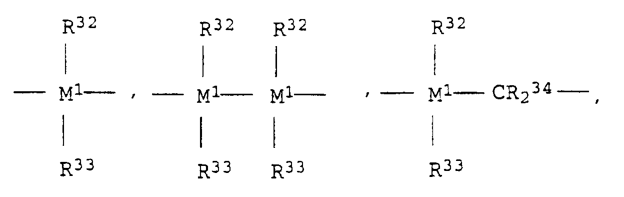 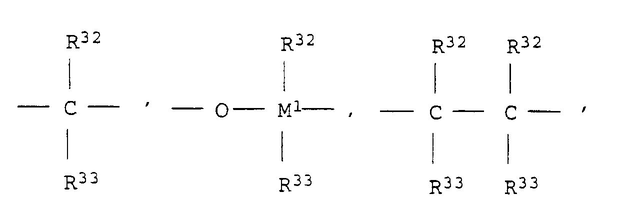 = BR³², = AlR³², -Ge-, -Sn-, -O-, -S-, = SO, = SO₂, = NR³², = CO, = PR³² oder = P(O)R³² ist,
wobei
- R³², R³³ und R³⁴: gleich oder verschieden sind und jeweils ein Wasserstoffatom, ein Halogenatom, eine C₁-C₁₀-Alkylgruppe, eine C₁-C₁₀-Fluoralkylgruppe, eine C₆-C₁₀-Fluorarylgruppe, eine C₆-C₁₀-Arylgruppe, eine C₁-C₁₀-Alkoxygruppe, eine C₂-C₁₀-Alkenylgruppe, eine C₇-C₄₀-Arylalkylgruppe, eine C₈-C₄₀-Arylalkenylgruppe oder eine C₇-C₄₀-Alkylarylgruppe bedeuten oder wobei zwei benachbarte Reste jeweils mit den sie verbindenden Atomen einen 4 bis 15 C-Atome aufweisenden gesättigten oder ungesättigten Ring bilden, und
- M¹: Silicium, Germanium oder Zinn ist,
- A: ―O―, ―S―, 〉NR³⁵ oder 〉PR³⁵ bedeuten,
mit
- R³⁵: C₁-C₁₀-Alkyl, C₆-C₁₅-Aryl, C₃-C₁₀-Cycloalkyl,
C₇-C₁₈-Alkylaryl oder Si(R³⁶)₃,
- R³⁶: Wasserstoff, C₁-C₁₀-Alkyl, C₆-C₁₅-Aryl, das seinerseits mit C₁-C₄-Alkylgruppen substituiert sein kann oder C₃-C₁₀-Cycloalkyl
oder wobei die Reste R²⁰ und R²⁸ gemeinsam eine Gruppierung -R³¹-bilden.

Bevorzugt sind die Reste X in der allgemeinen Formel (V) gleich.

Von den Metallocenkomplexen der allgemeinen Formel (V) sind 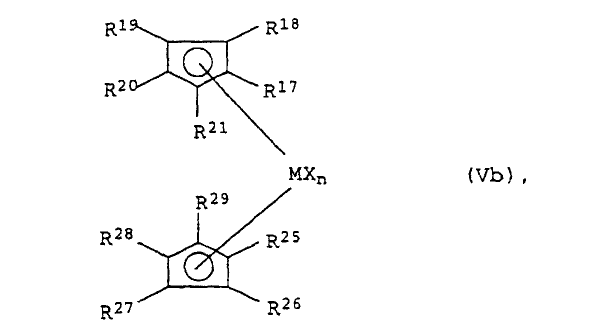 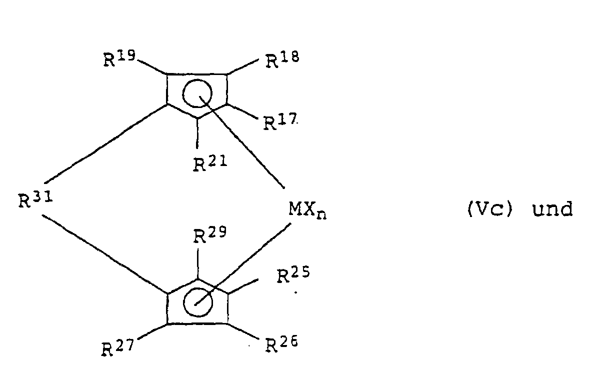 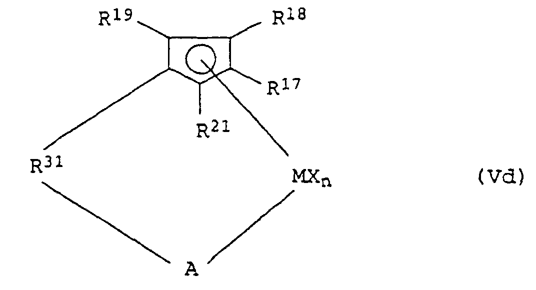 bevorzugt.

Von den Verbindungen der Formel (Vb) sind als bevorzugt diejenigen zu nennen, bei denen
- M: für Titan, Zirkonium oder Hafnium steht,
- X: Chlor, C₁-C₄-Alkyl oder Phenyl,
- n: die Zahl 2,
- R¹⁷ bis R²¹: Wasserstoff, C₁-C₄-Alkyl oder Si(R²⁴)₃ und
- R²⁵ bis R²⁹: Wasserstoff, C₁-C₄-Alkyl oder Si(R³⁰)₃ bedeuten.

Insbesondere sind die Verbindungen der Formel (Vb) geeignet, in denen die Cyclopentadienylreste gleich sind.

Beispiele für besonders geeignete Verbindungen sind u.a.: Bis(cyclopentadienyl)zirkoniumdichlorid, Bis(pentamethylcyclopentadienyl)zirkoniumdichlorid, Bis(methylcyclopentadienyl)zirkoniumdichlorid, Bis(ethylcyclopentadienyl)zirkoniumdichlorid, Bis(n-butylcyclopentadienyl)zirkoniumdichlorid und Bis(trimethylsilylcyclopentadienyl)zirkoniumdichlorid sowie die entsprechenden Dimethylzirkoniumverbindungen.

Von den Verbindungen der Formel (Vc) sind diejenigen besonders geeignet, in denen
- R¹⁷ und R²⁵: gleich sind und für Wasserstoff oder C₁-C₁₀-Alkylgruppen stehen,
- R²¹ und R²⁹: gleich sind und für Wasserstoff, eine Methyl-, Ethyl-, iso-Propyl- oder tert.-Butylgruppe stehen,
- R¹⁹ und R²⁷: C₁-C₄-Alkyl und
- R¹⁸ und R²⁶: Wasserstoff bedeuten
oder
zwei benachbarte Reste R¹⁸ und R¹⁹ sowie R²⁶ und R²⁷ gemeinsam für 4 bis 12 C-Atome aufweisende gesättigte oder ungesättigte cyclische Gruppen stehen,
- R³¹: 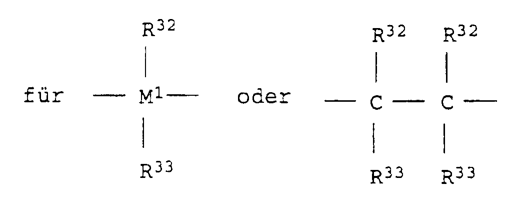 steht,
- M: für Titan, Zirkonium oder Hafnium und
- x: für Chlor, C₁-C₄-Alkyl oder Phenyl stehen.

Beispiele für besonders geeignete Komplexverbindungen sind u.a. Dimethylsilandiylbis(cyclopentadienyl)zirkoniumdichlorid, Dimethylsilandiylbis(indenyl)zirkoniumdichlorid, Dimethylsilandiylbis(tetrahydroindenyl)zirkoniumdichlorid, Ethylenbis(cyclopentadienyl)zirkoniumdichlorid, Ethylenbis(indenyl)zirkoniumdichlorid, Ethylenbis(tetrahydroindenyl)zirkoniumdichlorid, Tetramethylethylen-9-fluorenylcyclopentadienylzirkoniumdichlorid, Dimethylsilandiylbis(3-tert.butyl-5-methylcyclopentadienyl)zirkoniumdichlorid, Dimethylsilandiylbis(3-tert.butyl-5-ethylcyclopentadienyl)zirkoniumdichlorid, Dimethylsilandiylbis(2-methylindenyl)zirkoniumdichlorid, Dimethylsilandiylbis(2-isopropylindenyl)zirkoniumdichlorid, Dimethylsilandiylbis(2-tert.butylindenyl)zirkoniumdichlorid, Diethylsilandiylbis(2-methylindenyl)zirkoniumdibromid, Dimethylsilandiylbis(3-methyl-5-methylcyclopentadienyl)zirkoniumdichlorid, Dimethylsilandiylbis(3-ethyl-5-isopropylcyclopentadienyl)zirkoniumdichlorid, Dimethylsilandiylbis(2-ethylindenyl)zirkoniumdichlorid, Dimethylsilandiylbis[3,3'-(2-methylbenzindenyl)]-zirkoniumdichlorid Dimethylsilandiylbis[3,3'-(2-ethylbenzindenyl)]-zirkoniumdichlorid, Methylphenylsilandiylbis[3,3'-(2-ethylbenzindenyl)]-zirkoniumdichlorid, Methylphenylsilandiylbis[3,3'-(2-methylbenzindenyl)]-zirkoniumdichlorid, Diphenylsilandiylbis[3,3'-(2-methylbenzindenyl)]-zirkoniumdichlorid, Diphenylsilandiylbis[3,3'-(2-ethylbenzindenyl)]-zirkoniumdichlorid, und Diphenylsilandiylbis(2-methylindenyl)hafniumdichlorid sowie die entsprechenden Dimethylzirkoniumverbindungen.

Weitere Beispiele für geeignete Komplexverbindungen sind u.a. Dimethylsilandiylbis(2-methyl-4-phenylindenyl)zirkoniumdichlorid, Dimethylsilandiylbis(2-methyl-4-(p-tert.butylphenyl)indenyl)zirkoniumdichlorid, Dimethylsilandiylbis(2-methyl-4-naphthylindenyl)zirkoniumdichlorid, Dimethylsilandiylbis(2-methyl-4-isopropylindenyl)zirkoniumdichlorid und Dimethylsilandiylbis(2-methyl-4,6-diisopropylindenyl)zirkoniumdichlorid sowie die entsprechenden Dimethylzirkoniumverbindungen.

Bei den Verbindungen der allgemeinen Formel (Vd) sind als besonders geeignet diejenigen zu nennen, in denen
- M: für Titan oder Zirkonium,
- X: für Chlor, C₁-C₄-Alkyl oder Phenyl stehen.
- R³¹: für 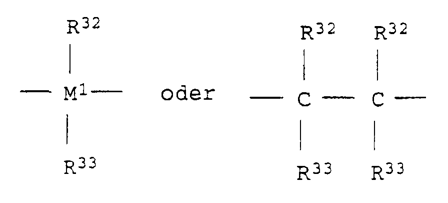 steht,
- A: für ―O―, ―S―, 〉NR³⁵
und
- R¹⁷ bis R¹⁹ und R²¹: für Wasserstoff, C₁-C₁₀-Alkyl, C₃-C₁₀-Cycloalkyl, C₆-C₁₅-Aryl oder Si(R²⁴)₃ stehen, oder wobei zwei benachbarte Reste für 4 bis 12 C-Atome aufweisende cyclische Gruppen stehen.

Die Synthese derartiger Komplexverbindungen kann nach an sich bekannten Methoden erfolgen, wobei die Umsetzung der entsprechend substituierten, cyclischen Kohlenwasserstoffanionen mit Halogeniden von Titan, Zirkonium, Hafnium, Vanadium, Niob oder Tantal, bevorzugt ist.

Beispiele für entsprechende Herstellungsverfahren sind u.a. im Journal of Organometallic Chemistry, 369 (1989), 359-370 beschrieben.

Als Komponente B) können die erfindungsgemäßen Trägerkatalysatoren auch Mischungen verschiedener Metallocenkomplexe enthalten.

Außerdem enthalten die erfindungsgemäßen Trägerkatalysatoren zur Olefinpolymerisation mindestens eine metalloceniumionenbildende Verbindung C). Geeignete metalloceniumionenbildende Verbindungen C) sind beispielsweise starke, neutrale Lewissäuren, ionische Verbindungen mit lewissauren Kationen oder ionische Verbindungen mit Brönsted-Säuren als Kationen.

Als starke, neutrale Lewissäuren sind Verbindungen der allgemeinen Formel (VI)

M²X¹X²X³ (VI)

bevorzugt, in der
- M²: ein Element der III, Hauptgruppe des Periodensystems bedeutet, insbesondere B, Al oder Ga, vorzugsweise B,
- X¹, X² und X³: für Wasserstoff, C₁-C₁₀-Alkyl, C₆-C₁₅-Aryl, Alkylaryl, Arylalkyl, Halogenalkyl oder Halogenaryl mit jeweils 1 bis 10 C-Atomen im Alkylrest und 6 bis 20 C-Atome im Arylrest oder Fluor, Chlor, Brom oder Jod stehen, insbesondere für Halogenaryle, vorzugsweise für Pentafluorphenyl.

Besonders bevorzugt sind Verbindungen der allgemeinen Formel (VI), in der X¹, X² und X³ gleich sind, vorzugsweise Tris(pentafluorphenyl)boran.

Als ionische Verbindungen mit lewissauren Kationen sind Verbindungen der allgemeinen Formel (VII)

[(Y^{a+})Q₁Q₂...Q_{z}]^{d+} (VII)

geeignet, in denen
- Y: ein Element der I. bis VI. Hauptgruppe oder der I. bis VIII. Nebengruppe des Periodensystems bedeutet,
- Q₁ bis Q_{z}: für einfach negativ geladene Reste wie C₁-C₂₈-Alkyl, C₆-C₁₅-Aryl, Alkylaryl, Arylalkyl, Halogenalkyl, Halogenaryl mit jeweils 6 bis 20 C-Atomen im Aryl- und 1 bis 28 C-Atome im Alkylrest, C₃-C₁₀-Cycloalkyl, welches gegebenenfalls mit C₁-C₁₀-Alkylgruppen substituiert sein kann, Halogen, C₁-C₂₈-Alkoxy, C₆-C₁₅-Aryloxy, Silyl- oder Mercaptylgruppen
- a: für ganze Zahlen von 1 bis 6 und
- z: für ganze Zahlen von 0 bis 5 steht,
- d: der Differenz a-z entspricht, wobei d jedoch größer oder gleich 1 ist.

Besonders geeignet sind Carboniumkationen, Oxoniumkationen und Sulfoniumkationen sowie kationische Übergangsmetallkomplexe. Insbesondere sind das Triphenylmethylkation, das Silberkation und das 1,1'-Dimethylferrocenylkation zu nennen. Bevorzugt besitzen sie nicht koordinierende Gegenionen, insbesondere Borverbindungen, wie sie auch in der WO 91/09882 genannt werden, bevorzugt Tetrakis(pentafluorophenyl)borat.

Ionische Verbindungen mit Brönsted-Säuren als Kationen und vorzugsweise ebenfalls nicht koordinierende Gegenionen sind in der WO 91/09882 genannt, bevorzugtes Kation ist das N,N-Dimethylanilinium.

Die Menge an starken, neutralen Lewissäuren, ionischen Verbindungen mit lewissauren Kationen oder ionischen Verbindungen mit Brönsted-Säuren als Kationen beträgt bevorzugt 0,1 bis 10 Äquivalente, bezogen auf den Metallocenkomplex B).

Besonders geeignet als metalloceniumionenbildende Verbindung C) sind offenkettige oder cyclische Alumoxanverbindungen der allgemeinen Formeln (VIII) oder (IX) 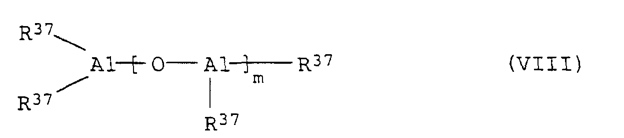 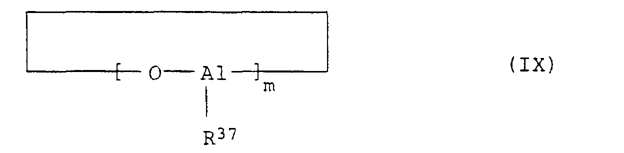 wobei
- R³⁷: eine C₁-C₁₀-Alkylgruppe bedeutet, bevorzugt eine Methyl- oder Ethylgruppe und m für eine ganze Zahl von 5 bis 30, bevorzugt 10 bis 25 steht.

Die Herstellung dieser oligomeren Alumoxanverbindungen erfolgt üblicherweise durch Umsetzung einer Lösung von Trialkylaluminium mit Wasser und ist u.a. in der EP-A 284 708 und der US-A 4 794 096 beschrieben.

In der Regel liegen die dabei erhaltenen oligomeren Alumoxanverbindungen als Gemische unterschiedlich langer, sowohl linearer als auch cyclischer Kettenmoleküle vor, so daß m als Mittelwert anzusehen ist. Die Alumoxanverbindungen können auch im Gemisch mit anderen Metallalkylen, bevorzugt mit Aluminiumalkylen vorliegen.

Es hat sich als vorteilhaft erwiesen, die Metallocenkomplexe B) und die oligomeren Alumoxanverbindungen der allgemeinen Formeln (VIII) oder (IX) in solchen Mengen zu verwenden, daß das atomare Verhältnis zwischen Aluminium aus den oligomeren Alumoxanverbindungen und dem Übergangsmetall aus den Metallocenkomplexen im Bereich von 10:1 bis 10⁶:1, insbesondere im Bereich von 10:1 bis 10⁴:1, liegt.

Weiterhin können als Komponente C) anstelle der Alumoxanverbindungen der allgemeinen Formeln (VIII) oder (IX) Aryloxyalumoxane, wie in der US-A 5 391 793 beschrieben, Aminoaluminoxane, wie in der US-A 5 371 260 beschrieben, Aminoaluminoxanhydrochloride, wie in der EP-A 633 264 beschrieben, Siloxyaluminoxane, wie in der EP-A 621 279 beschrieben, oder Mischungen daraus eingesetzt werden.

Vorzugsweise werden sowohl die Metallocenkomplexe B) als auch die metalloceniumionenbildende Verbindungen C) in Lösung eingesetzt, wobei aromatische Kohlenwasserstoffe mit 6 bis 20 C-Atomen, insbesondere Xylole und Toluol, besonders bevorzugt sind.

Die erfindungsgemäßen Trägerkatalysatoren zur Olefinpolymerisation können als weitere Komponente D) zusätzlich noch eine oder mehrere von C) verschiedene Metallverbindungen der allgemeinen Formel (X)

M³ (R³⁸)ᵣ (R³⁹)ₛ (R⁴⁰)ₜ (X)

in der
- M³: ein Alkali-, ein Erdalkalimetall oder ein Metall der III. Hauptgruppe des Periodensystems, d.h. Bor, Aluminium, Gallium, Indium oder Thallium bedeutet,
- R³⁸: Wasserstoff, C₁-C₁₀-Alkyl, C₆-C₁₅-Aryl, Alkylaryl oder Arylalkyl mit jeweils 1 bis 10 C-Atom im Alkylrest und 6 bis 20 C-Atomen im Arylrest,
- R³⁹ und R⁴⁰: Wasserstoff, Halogen, C₁-C₁₀-Alkyl, C₆-C₁₅-Aryl, Alkylaryl, Arylalkyl oder Alkoxy mit jeweils 1 bis 10 C-Atomen im Alkylrest und 6 bis 20 C-Atomen im Arylrest,
- r: eine ganze Zahl von 1 bis 3
und
- s und t: ganze Zahlen von 0 bis 2 bedeuten, wobei die Summe r+s+t der Wertigkeit von M³ entspricht,
enthalten.

Von den Metallverbindungen der allgemeinen Formel (X) sind diejenigen bevorzugt, in denen
- M³: Lithium, Magnesium oder Aluminium bedeutet und
- R³⁹ und R⁴⁰: für C₁-C₁₀-Alkyl stehen.

Besonders bevorzugte Metallverbindungen der Formel (X) sind n-Butyl-Lithium, n-Butyl-n-octyl-Magnesium, n-Butyl-n-heptyl-Magnesium, Tri-n-hexyl-aluminium, Tri-iso-butyl-aluminium, Triethylaluminium und Trimethylaluminium.

Wenn eine Metallverbindung D) eingesetzt wird, ist sie bevorzugt in einer solchen Menge im Katalysatorsystem enthalten, daß das molare Verhältnis von M³ aus Formel (X) zu Übergangsmetall M aus Formel (V) von 800:1 bis 1:1, insbesondere 500:1 bis 50:1, beträgt.

Bei der Herstellung der Trägerkatalysatoren geht man vorzugsweise so vor, daß man zunächst ein Copolymerisat A) in Lösung in einem geeigneten Lösungsmittel, z.B. aromatischen Lösungsmittel wie Toluol, polymerisiert, beziehungsweise entsprechende Monomere copolymerisiert und das gebildete Copolymerisat dann in Lösung durch polymeranaloge Reaktion in das Copolymerisat A) überführt. Anschließend nimmt man dann die weiteren Schritte mit dieser Lösung vor. Oder es wird ein separat hergestelltes Copolymerisat A), das dann beispielsweise in Substanz vorliegt, in einem geeigneten Lösungsmittel gelöst.

Zu dieser Lösung des Copolymerisats A) werden dann B) und C) gegeben. Die Reihenfolge der Zugabe ist an sich beliebig. Bevorzugt werden jedoch zunächst B) und C) in Lösung miteinander gemischt und dann zu der Lösung des Copolymerisats A) gegeben.

Die als Komponente D) eingesetzten Verbindungen der allgemeinen Formel (X) können vor der Zugabe der Metallocenkomplexe B) und der metalloceniumionenbildenden Verbindungen C) zu dem Copolymerisat A) zugegeben werden. Insbesondere gibt man dann eine solche Verbindung der Formel (X) vor den Komponenten B) und C) zu, wenn das Copolymerisat A) in den Monomereinheiten III acide Wasserstoffatome enthält. Es ist jedoch auch möglich, die gleichen oder andere Verbindungen der Formel (X) zunächst mit den Metallocenkomplexen B) zu mischen und diese Mischungen dann zu dem Copolymerisat A) zu geben.

Da die Kontaktierung des Copolymerisats A) mit dem Metallocenkomplexen B) und den metalloceniumionenbildenden Verbindungen C) in einer homogenen Lösung erfolgt, wird hierdurch eine homogene Verteilung der Aktivkomponenten gewährleistet.

Vor oder nach der Zugabe der Metallocenkomplexe B) und der metalloceniumionenbildenden Verbindungen C) zu dem Copolymerisat A) wird dieses vorzugsweise in der Lösung bei Temperaturen im Bereich von 0 bis 150°C, insbesondere von 50 bis 100°C, durch eine Diels-Alder-Reaktion der Cyclopentadienylreste vernetzt. Das sich bildende, vernetzte Polymer ist jedoch noch so weit gequollen, daß es sich wie eine homogene Lösung verhält.

In der Regel bildet sich bei der Zugabe der Komponenten B) und C) zu A) ein Feststoff, der nach dem Entfernen des Lösungsmittels in feinteiliger Form, bevorzugt in Partikel mit mittleren Teilchendurchmessern im Bereich von 5 bis 200 µm, und insbesondere von 20 bis 100 µm, vorliegt.

Nach der Isolierung ist das resultierende vernetzte Polymer mit den gebundenen Metallocenkomplexen in organischen Lösungsmitteln überwiegend unlöslich und in dieser Form zum Einsatz in Polymerisationsreaktion in der Gasphase oder in Suspension geeignet.

Dieser unlösliche Trägerkatalysator kann unter thermischer Belastung, also beispielsweise im Verlauf der Polymerisationsreaktion oder bei anschließenden Aufarbeitungsschritten, etwa bei einer Extrusion, gemäß einer Retro-Diels-Alder-Reaktion wieder zu den löslichen Copolymerketten fragmentieren. Der auf diese Weise fragmentierte Trägerkatalysator kann sich auf diese Weise besonders homogen in dem gebildeten Polymer verteilen.

Wie die erfindungsgemäßen Trägerkatalysatoren sind auch die die Monomereinheiten I, II und IIIa enthaltenden Copolymerisate bis-her nicht bekannt gewesen. Diese Copolymerisate lässen sich als Trägermaterial für die verschiedensten Metallocenkatalysatoren verwenden.

Die erfindungsgemäßen Trägerkatalysatoren eignen sich beispielsweise zur Polymerisation von Olefinen und insbesondere zur Polymerisation von α-Olefine, d.h. Kohlenwasserstoffen mit endständigen Doppelbindungen. Geeignete Monomere können funktionalisierte olefinisch ungesättigte Verbindungen wie Ester- oder Amidderivate der Acryl- oder Methacrylsäure, beispielsweise Acrylate, Methacrylate oder Acrylnitril sein. Bevorzugt sind unpolare olefinische Verbindungen, worunter auch arylsubstituierte α-Olefine fallen. Besonders bevorzugte α-Olefine sind lineare oder verzweigte C₂-C₁₂-Alk-1-ene, insbesondere lineare C₂-C₁₀-Alk-1-ene wie Ethylen, Propylen, But-1-en, Pent-1-en, Hex-1-en, Hept-1-en, Oct-1-en, Non-1-en, Dec-1-en oder 4-Methyl-pent-1-en oder unsubstituierte oder substituierte vinylaromatische Verbindungen der allgemeinen Formel (XI) 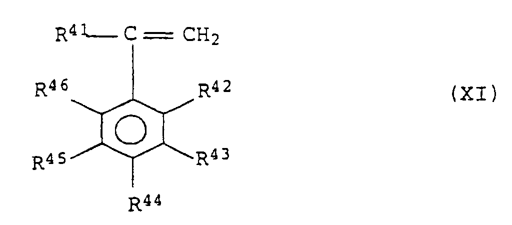 in der die Substituenten folgende Bedeutung haben:
- R⁴¹: Wasserstoff oder C₁- bis C₄-Alkyl, vorzugsweise Wasserstoff;
- R⁴² bis R⁴⁶: unabhängig voneinander Wasserstoff, C₁-C₁₂-Alkyl, C₆-C₁₈-Aryl oder Halogen oder wobei zwei benachbarte Reste gemeinsam für 4 bis 15 C-Atome aufweisende Gruppen stehen; vorzugsweise Wasserstoff, C₁- bis C₄-Alkyl, Chlor, Phenyl, Biphenyl, Naphthalin oder Anthracen oder wobei zwei benachbarte Reste gemeinsam für 4 bis 12 C-Atome aufweisende Gruppen stehen, so daß sich als Verbindungen der allgemeinen Formel V beispielsweise Naphthalinderivate oder Anthracenderivate ergeben.

Beispiele für bevorzugte vinylaromatische Monomere sind Styrol, p-Methylstyrol, p-Chlorstyrol, 2,4-Dimethylstyrol, 4-Vinylbiphenyl, Vinylnaphthalin oder Vinylanthracen.

Es können auch Gemische aus verschiedenen α-Olefinen polymerisiert werden.

Insbesondere lassen sich die erfindungsgemäßen Trägerkatalysatoren in verschiedenen Verfahren zur Polymerisation von Ethylen, Propylen oder Styrol einsetzen. Neben der Homopolymerisation von Ethylen, Propylen oder Styrol sind die erfindungsgemäßen Trägerkatalysatoren insbesondere zur Copolymerisation geeignet, da die Katalysatoren zu einem gleichmäßigen Einbau des Comonomers in das Polymerisat und in der Regel zu engen Molmassenverteilungen führen. Als Comonomere bei der Ethylenpolymerisation werden bevorzugt C₃- bis C₈-α-Olefine, insbesondere Buten, Penten, Hexen und/oder Octen verwendet. Bevorzugte Comonomere bei der Propylenpolymerisation sind Ethylen und/oder Buten.

Das erfindungsgemäße Polymerisationsverfahren wird im allgemeinen bei Temperaturen im Bereich von -50 bis 300°C, vorzugsweise im Bereich von 0 bis 150°C und bei Drücken im Bereich von 0,5 bis 3000 bar, vorzugsweise im Bereich von 1 bis 80 bar, durchgeführt.

Die Polymerisation kann in Lösung, in Suspension, in flüssigen Monomeren oder in der Gasphase durchgeführt werden. Bevorzugt erfolgt die Polymerisation in flüssigen Monomeren, in Suspension oder nach einem Gasphasenverfahren, wobei Verfahren in gerührter Gasphase oder in einer Gasphasenwirbelschicht bevorzugt sind.

Die erfindungsgemäßen Trägerkatalysatoren zeichnen sich vor allem dadurch aus, daß sie eine homogene Verteilung der Katalysatorkomponenten auf dem Trägermaterial besitzen und ohne größeren Aufwand mit einer Vielzahl von verschiedenen Metallocensystemen herstellbar sind, wobei die Aktivkomponente fest an den Träger gebunden ist und auch bei erhöhter Polymerisationstemperatur eine gute Polymerisatmorphologie erhalten wird.

### Beispiele

### Beispiel 1 (Referenz Beispiel)

Herstellung eines Styrol-p-Chlormethylstyrol-p-Bromstyrol-Copolymeren mit 30 mol-% Chlormethylstyrol, 10 mol-% Bromstyrol und 60 mol-% Styrol

6 mmol (916 mg) p-Chlormethylstyrol, 2 mmol (366 mg) p-Bromstyrol sowie 12 mmol (1,25 g) Styrol wurden in 2,5 ml Toluol gelöst und mit 50 mg AIBN bei 70°C 24h polymerisiert. Die Lösung wurde mit Dichlormethan auf 25 ml verdünnt und das Polymer aus 250 ml Methanol ausgefällt und im Vakuum getrocknet.

Ausbeute: 72%.

Der p-Chlormethylgehalt ließ sich mittels ¹H-NMR-Spektroskopie bestimmen und betrugt 30 mol-%.
1H-NMR (CDCl3, 250 MHz) [ppm]: 4,49 (bs, 2H, Ph-CH2-Cl)

### Beispiel 2 (Referenz Beispiel)

### Herstellung eines Styrol-p-Methoxymethylstyrol-p-Bromstyrol-Copolymeren

1g des in Beispiel 1 erhaltenen Copolymerisats (enthaltend 2,37 mmol p-Chlormethylstyrol) wurden in einer Mischung aus 25 ml Methanol und 50 ml THF gelöst und nach Zugabe von 1280 mg (23,7 mmol) Natriummethanolat 24h auf 60°C erwärmt. Die Chlormethylgruppen wurden hierbei in Methoxymethyleinheiten umgewandelt. Während der Reaktion schied sich Natriumchlorid ab. Die Lösung wurde auf 10 ml eingeengt und das Polymer aus 100 ml Methanol ausgefällt und im Vakuum getrocknet.
Ausbeute: 88%.

Der Methoxymethylgehalt ließ sich mittels ¹H-NMR-Spektroskopie bestimmen und betrug 30 mol-%.
¹H-NMR (CDCl₃, 250 MHz) [ppm]: 4,35 (bs, 2H, Ph-CH₂-O-), 3,32 (bs, 3H, -O-CH₃)

### Beispiel 3

### Herstellung eines cyclopentadienhaltigen Copolymeren

500 mg (0,4 mmol p-Bromstyrol) des in Beispiel 2 erhaltenen Copolymerisats wurden in 50 ml THF gelöst und auf -78°C abgekühlt. Dazu wurden 0,27 ml (0,4 mmol) einer n-Buthyllithium-Lösung (1,5 M in Hexan) getropft. Nach 10 min wurden 0,8 ml (0,4 mmol) einer Dimethylfulvenlösung (0,5 M in THF) zugegeben. Nach weiteren 10 min wurde die Kühlung entfernt und auf Raumtemperatur erwärmt. Die Lösung wurde auf 10 ml eingeengt und das Polymer aus 100 ml Methanol ausgefällt und im Vakuum getrocknet.
Ausbeute: 92%.

### Beispiel 4

### Herstellung von Trägerkatalysatoren

### Beispiel 4.1

### Trägerung von [Dimethyl-bis(2-methylbenzindenyl)silyl]zirconiumdichlorid

100 mg des in Beispiel 3 erhaltenen Copolymerisats wurden in 5 ml Toluol 24h auf 80°C erwärmt. Hierbei nahm die Viskosität der Lösung merklich zu. Nach dem Abkühlen auf Raumtemperatur wurde 1 ml einer Lösung aus 55,2 mg (0,1 mmol) [Dimethyl-bis(2-methylbenzindenyl)silyl]zirconiumdichlorid in 20 ml (32 mmol Al) Methylaluminoxan (1,6 M in Toluol) zugegeben. Der Träger fiel dabei zusammen mit dem farbigen Metallocen aus. Die Fällung wurde durch Zugabe von 100 ml Hexan vervollständigt. Die überstehende, nur schwach gefärbte Lösung wurde mittels einer Kanüle entfernt und der Katalysator ein weiteres Mal mit Hexan gewaschen. Nach dem erneutem Entfernen des Lösungsmittels wurde der Katalysator unter Rühren mit einem Magneten im Hochvakuum getrocknet. Das Polymer wurde hierbei zu einem feinen, fließfähigen Pulver zermahlen.

### Beispiel 4.2

### Trägerung von [Dimethyl-bis(2-methylindenyl)silyl]zirconiumdichlorid

Es wurde wie in Beispiel 4.1 vorgegangen, jedoch wurde zu dem in Beispiel 3 erhaltenen Copolymerisat 1 ml einer Lösung aus 47,6 mg (0,1 mmol) [Dimethyl-bis(methylindenyl)silyl]zirconiumdichlorid in 20 ml (32 mmol Al) Methylaluminoxan (1,6 M in Toluol) zugegeben. Man erhielt ein frei fließendes, oranges Katalysatorpulver.

### Beispiel 4.3

### Trägerung von [Dimethyl-bis(2-methyl-4-phenylindenyl)silyl]zirconiumdichlorid

Es wurde wie in Beispiel 4.1 vorgegangen, jedoch wurde zu dem in Beispiel 3 erhaltenen Copolymerisat 1 ml einer Lösung aus 60,1 mg (0,1 mmol) [Dimethyl-bis(2-methyl-4-phenylindenyl)silyl]zirconiumdichlorid in 20 ml (32 mmol Al) Methylaluminoxan (1,6 M in Toluol) zugegeben. Man erhielt ein frei fließendes, pink-farbenes Katalysatorpulver.

### Beispiel 5

### Polymerisation von Propylen

### Beispiel 5.1

In einem 11 Autoklaven wurden 400 ml Hexan zusammen mit 0,8 ml einer Triisobutyl-aluminium-Lösung (1 M in Hexan) auf 50°C temperiert und 15 min gerührt. 2,5 ml Methylaluminoxan-Lösung (1,6 M in Toluol) sowie jeweils 50 mg des in Beispiel 4.1 hergestellten Trägerkatalysators wurden hinzugegeben und weitere 15 min gerührt. Dann wurde langsam ein Propendruck von 5 bar aufgebaut. Die Polymerisation erfolgte bei konstantem Druck für eine Dauer von 30 min. Es wurde ein Polymerisat mit guter Morphologie erhalten. Insbesondere das Fehlen von Feinstaub zeigte, daß keine Aktivkomponente aus dem Trägerkatalysator herausgelöst wurde.

Die Polymerisationsergebnisse sind in der Tabelle wiedergegeben.

### Beispiel 5.2

In einem 11 Autoklaven wurden 400 ml Hexan zusammen mit 0,8 ml einer Triisobutyl-aluminium-Lösung (1 M in Hexan) auf 50°C temperiert und 15 min gerührt. 2,5 ml Methylaluminoxan-Lösung (1,6 M in Toluol) sowie jeweils 50 mg des in Beispiel 4.2 hergestellten Trägerkatalysators wurden hinzugegeben und weitere 15 min gerührt. Dann wurde langsam ein Propendruck von 5 bar aufgebaut. Die Polymerisation erfolgte bei konstantem Druck für eine Dauer von 30 min. Es wurde ein Polymerisat mit guter Morphologie erhalten. Insbesondere das Fehlen von Feinstaub zeigte, daß keine Aktivkomponente aus dem Trägerkatalysator herausgelöst wurde.

Die Polymerisationsergebnisse sind in der Tabelle wiedergegeben.

### Beispiel 5.3

In einem 11 Autoklaven wurden 400 ml Hexan zusammen mit 0,8 ml einer Triisobutyl-aluminium-Lösung (1 M in Hexan) auf 50°C temperiert und 15 min gerührt. 2,5 ml Methylaluminoxan-Lösung (1,6 M in Toluol) sowie jeweils 50 mg des in Beispiel 4.3 hergestellten Trägerkatalysators wurden hinzugegeben und weitere 15 min gerührt. Dann wurde langsam ein Propendruck von 5 bar aufgebaut. Die Polymerisation erfolgte bei konstantem Druck für eine Dauer von 30 min. Es wurde ein Polymerisat mit guter Morphologie erhalten. Insbesondere das Fehlen von Feinstaub zeigte, daß keine Aktivkomponente aus dem Trägerkatalysator herausgelöst wurde.

Die Polymerisationsergebnisse sind in der Tabelle wiedergegeben.

**Tabelle**

| Beispiel | Ausbeute [g] | Aktivität [kg PP/ (mol Zr h bar)] | Produktivität [g PP/ (g Kat. h bar)] |
|---|---|---|---|
| 5.1. | 11,2 | 3300 | 90 |
| 5.2. | 23,6 | 6800 | 190 |
| 5.3. | 27,4 | 8200 | 220 |

## Patentansprüche

1. Trägerkatalysator zur Olefinpolymerisation enthaltend
A) als Trägermaterial ein Copolymerisat aus mindestens den Monomereinheiten I, II und III,
wobei die Monomereinheiten I solche der allgemeinen Formel (I) und die Monomereinheiten II solche der allgemeinen Formel (II) sind, 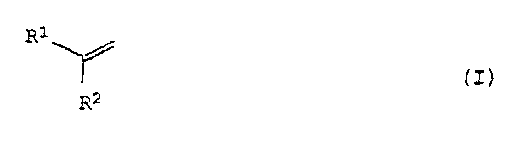 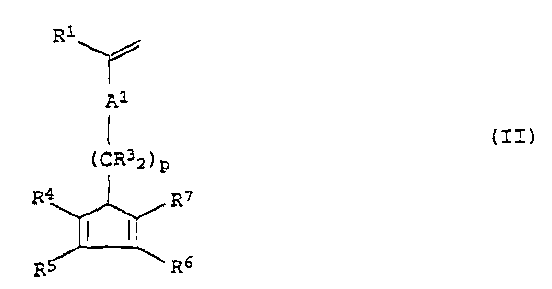 in denen die Variablen die folgende Bedeutung haben:
R¹ Wasserstoff, C₁-C₄-Alkyl oder Phenyl,
R² substituiertes oder unsubstituiertes Aryl oder verzweigtes oder unverzweigtes Alkyl oder Alkenyl,
A¹ eine direkte chemische Bindung oder eine substituierte oder unsubstituierte Phenylengruppe,
R³ gleiche oder verschiedene Reste Wasserstoff, C₁-C₁₀-Alkyl oder substituiertes oder unsubstituiertes Phenyl,
p eine ganze Zahl von 0 bis 8, und
R⁴ bis R⁷ Wasserstoff, C₁-C₁₀-Alkyl oder substituiertes oder unsubstituiertes Phenyl,
und die Monomereinheiten III polare Gruppen aufweisen, sowie
B) mindestens einen Metallocenkomplex der allgemeinen Formel (V) 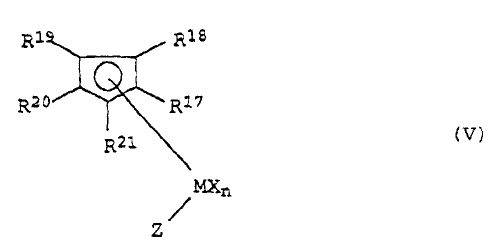 in der die Substituenten und Indizes folgende Bedeutung haben:
M Titan, Zirkonium, Hafnium, Vanadium, Niob, Tantal oder Chrom sowie Elemente der III. Nebengruppe des Periodensystems und der Lanthanoiden.
X Fluor, Chlor, Brom, Iod, Wasserstoff, C₁-C₁₀-Alkyl, C₆-C₁₅-Aryl, Alkylaryl mit 1 bis 10 C-Atomen im Alkylrest und 6 bis 20 C-Atomen im Arylrest, -OR²² oder -NR²²R²³,
n 1, 2 oder 3, wobei n der Wertigkeit von M minus der Zahl 2 entspricht,
wobei
R²² und R²³ C₁-C₁₀-Alkyl, C₆-C₁₅-Aryl, Alkylaryl, Arylalkyl, Fluoralkyl oder Fluoraryl mit jeweils 1 bis 10 C-Atomen im Alkylrest und 6 bis 20 C-Atomen im Arylrest bedeuten und
die Reste X gleich oder verschieden sind,
R¹⁷ bis R²¹ Wasserstoff, C₁-C₁₀-Alkyl, 5- bis 7-gliedriges Cycloalkyl, das seinerseits durch C₁-C₁₀-Alkyl substituiert sein kann, C₆-C₁₅-Aryl oder Arylalkyl, wobei auch zwei benachbarte Reste gemeinsam für 4 bis 15 C-Atome aufweisende gesättigte oder ungesättigte cyclische Gruppen stehen können, oder Si(R²⁴)₃ mit
R²⁴ C₁-C₁₀-Alkyl, C₃-C₁₀-Cycloalkyl oder C₆-C₁₅-Aryl sein kann und
für 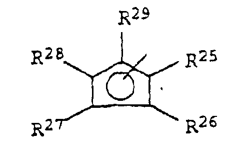 steht,
wobei die Reste
R²⁵ bis R²⁹ Wasserstoff, C₁-C₁₀-Alkyl, 5- bis 7-gliedriges Cycloalkyl, das seinerseits durch C₁-C₁₀-Alkyl substituiert sein kann, C₆-C₁₅-Aryl oder Arylalkyl bedeuten und wobei auch zwei benachbarte Reste gemeinsam für 4 bis 15 C-Atome aufweisende gesättigte oder ungesättigte cyclische Gruppen stehen können, oder Si(R³⁰)₃ mit
R³⁰ C₁-C₁₀-Alkyl, C₃-C₁₀-Cycloalkyl oder C₆-C₁₅-Aryl bedeuten,
oder wobei die Reste R²⁰ und Z gemeinsam eine Gruppierung -R³¹-A- bilden, in der
R³¹ 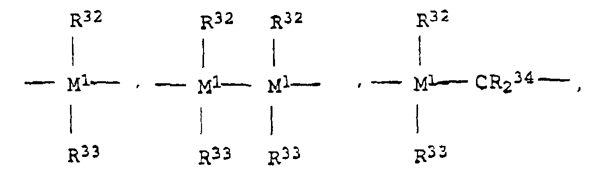 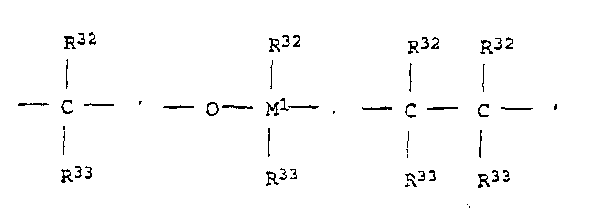 = BR³², = AlR³², -Ge-, -Sn-, -O-, -S-, = SO, = SO₂,
= NR³², = CO, = PR³² oder = P(O)R³² ist,
wobei
R³², R³³ und R³⁴ gleich oder verschieden sind und jeweils ein Wasserstoffatom, ein Halogenatom, eine C₁-C₁₀-
Alkylgruppe, eine C₁-C₁₀-Fluoralkylgruppe, eine C₆-C₁₀-Fluorarylgruppe, eine C₆-C₁₀-Arylgruppe, eine C₁-C₁₀-Alkoxygruppe, eine C₂-C₁₀-Alkenylgruppe, eine C₇-C₄₀-Arylalkylgruppe, eine C₈-C₄₀-
Arylalkenylgruppe oder eine C₇-C₄₀-Alkylarylgruppe bedeuten oder wobei zwei benachbarte Reste jeweils mit den sie verbindenden Atomen einen 4 bis 15 C-Atome aufweisenden gesättigten oder ungesättigten Ring bilden, und
M¹ Silicium, Germanium oder Zinn ist,
A ―O―, ―S―, 〉NR³⁵ oder 〉PR³⁵ bedeuten,
mit
R³⁵ C₁-C₁₀-Alkyl, C₆-C₁₅-Aryl, C₃-C₁₀-Cycloalkyl, C₇-C₁₈-Alkylaryl oder Si(R³⁶)₃,
R³⁶ Wasserstoff, C₁-C₁₀-Alkyl, C₆-C₁₅-Aryl, das seinerseits mit C₁-C₄-Alkylgruppen substituiert sein kann oder C₃-C₁₀-Cycloalkyl
oder wobei die Reste R²⁰ und R²⁸ gemeinsam eine Gruppierung -R³¹- bilden und
C) mindestens eine metalloceniumionenbildende Verbindung.

2. Trägerkatalysator nach Anspruch 1, wobei die Monomereinheiten III Verbindungen gemäß der allgemeinen Formel (IIIa) sind, 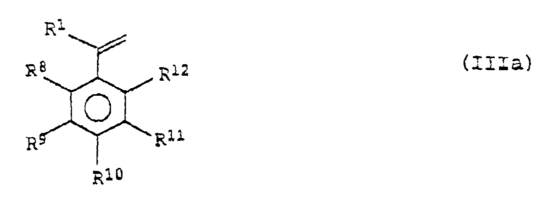 in der
R⁸ bis R¹² Wasserstoff, C₁-C₁₀-Alkyl, 5- bis 7-gliedriges Cycloalkyl, das seinerseits durch C₁-C₁₀-Alkyl substituiert sein kann, C₆-C₁₅-Aryl oder Arylalkyl sein kann, oder wobei
die Reste mit benachbarten Resten jeweils einen 5 bis 15 C-Atome aufweisenden gesättigten oder ungesättigten Ring bilden können,
wobei jedoch mindestens ein Rest R⁸ bis R¹² eine Gruppe der allgemeinen Formel (IV) ist, 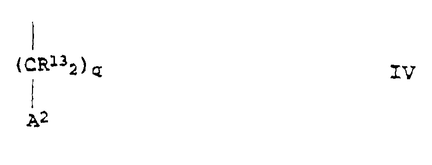 in der
R¹³ gleiche oder verschiedene Reste Wasserstoff, C₁-C₁₀-Alkyl oder substituiertes oder unsubstituiertes Phenyl,
q eine ganze Zahl von 0 bis 8 und
A² eine Gruppe OR¹⁴, NR¹⁴R¹⁵, PR¹⁴R¹⁵, CN, COOR¹⁴ oder (O-(CH₂)_{q'})_{q''}-OR¹⁴, wobei R¹⁴ und R¹⁵ gleich oder verschieden sind und für Wasserstoff oder C₁-C₄-Alkyl stehen, und q' eine ganze Zahl von 1 bis 5 und q'' eine ganze Zahl von 1 bis 8 bedeutet,
ist, oder wobei die Monomereinheiten III Verbindungen der allgemeinen Formel (IIIb), 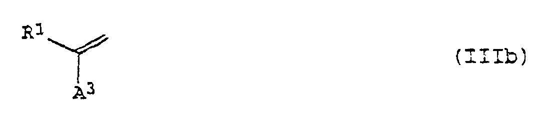 mit
A³ COOR¹⁶ oder CN, wobei
R¹⁶ für Wasserstoff oder C₁-C₁₀-Alkyl steht,
sind.

3. Tragerkatalysator nach Anspruch 1 oder 2, wobei das Copolymerisat A) über die Monomereinheiten II vernetzt ist.

4. Trägerkatalysator nach den Ansprüchen 1 bis 3, enthaltend als weitere Komponente D) zusätzlich eine oder mehrere von C) verschiedene Metallverbindungen der allgemeinen Formel (X)
M³ (R³⁸)ᵣ (R³⁹)ₛ (R⁴⁰)ₜ (X)
in der
M³ ein Alkali-, ein Erdalkalimetall oder ein Metall der III. Hauptgruppe des Periodensystems, d.h. Bor, Aluminium, Gallium, Indium oder Thallium bedeutet,
R³⁸ Wasserstoff, C₁-C₁₀-Alkyl, C₆-C₁₅-Aryl, Alkylaryl oder Arylalkyl mit jeweils 1 bis 10 C-Atom im Alkylrest und 6 bis 20 C-Atomen im Arylrest,
R³⁹ und R⁴⁰ Wasserstoff, Halogen, C₁-C₁₀-Alkyl, C₆-C₁₅-Aryl, Alkylaryl, Arylalkyl oder Alkoxy mit jeweils 1 bis 10 C-Atomen im Alkylrest und 6 bis 20 C-Atomen im Arylrest,
r eine ganze Zahl von 1 bis 3
und
s und t ganze Zahlen von 0 bis 2 bedeuten, wobei die Summe r+s+t der Wertigkeit von M³ entspricht.

5. Trägerkatalysator nach Anspruch 4, wobei das als Trägermaterial dienende Copolymerisat A) vor dem Aufbringen von Metallocenkomplex B) und metalloceniumionenbildenden Verbindung C) mit Verbindungen der allgemeinen Formel (X) vorbehandelt wurde.

6. Verfahren zur Herstellung von Trägerkatalysatoren nach den Ansprüchen 1 bis 5, **dadurch gekennzeichnet, daß** man Copolymerisate enthaltend die Monomereinheiten I, II und III in Lösung herstellt oder nach der Herstellung in einem geeigneten Lösungsmittel löst und dieser Lösung den Metallocenkomplex B) und die metalloceniumionenbildende Verbindung C) zugibt.

7. Verfahren zur Herstellung von Trägerkatalysatoren nach Anspruch 6, **dadurch gekennzeichnet, daß** man entweder vor oder nach der Zugabe von Metallocenkomplex B) und metalloceniumionenbildender Verbindung C) das Copolymerisat A) durch Diels-Alder-Reaktion bei Temperaturen von 0 bis 150°C vernetzt.

8. Verfahren zur Herstellung von Trägerkatalysatoren nach Anspruch 6 oder 7, **dadurch gekennzeichnet, daß** man vor der Zugabe von Metallocenkomplex B) und metalloceniumionenbildender Verbindung C) das Copolymerisat A) mit Verbindungen der allgemeinen Formel (X) vorbehandelt.

9. Als Trägermaterial für Katalysatoren zur Polymerisation von Olefinen geeignete Copolymerisate enthaltend die Monomereinheiten I, II und IIIa.

10. Verfahren zur Polymerisation von Olefinen in Gegenwart eines Trägerkatalysators gemäß Anspruch 1 bis 5.

## Claims

1. A supported catalyst for olefin polymerization comprising
A) as support material, a copolymer comprising at least the monomer units I, II and III,
where the monomer units I have the formula (I) and the monomer units II have the formula (II), 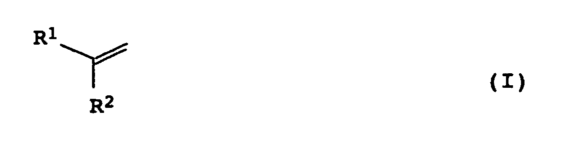 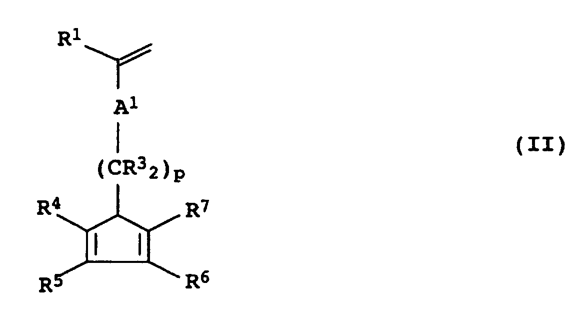 where the variables have the following meanings:
R¹ is hydrogen, C₁-C₄-alkyl or phenyl,
R² is substituted or unsubstituted aryl or branched or unbranched alkyl or alkenyl,
A¹ is a direct chemical bond or a substituted or unsubstituted phenylene group,
R³ are identical or different and are each hydrogen, C₁-C₁₀-alkyl or substituted or unsubstituted phenyl,
p is an integer from 0 to 8, and
R⁴ to R⁷ are hydrogen, C₁-C₁₀-alkyl or substituted or unsubstituted phenyl,
and the monomer units III have polar groups,
and
B) at least one metallocene complex of the formula (V) 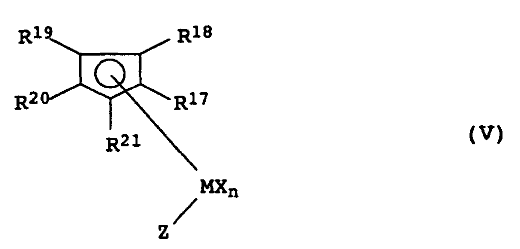 where the substituents and indices have the following meanings:
M is titanium, zirconium, hafnium, vanadium, niobium, tantalum or chromium or an element of transition group III of the Periodic Table and of the lanthanides,
X is fluorine, chlorine, bromine, iodine, hydrogen, C₁-C₁₀-alkyl, C₆-C₁₅-aryl, alkylaryl having from 1 to 10 carbon atoms in the alkyl radical and from 6 to 20 carbon atoms in the aryl radical, -OR²² or -NR²²R²³,
n is 1, 2 or 3, where n corresponds to the valence of M minus 2,
where
R²² and R²³ are C₁-C₁₀-alkyl, C₆-C₁₅-aryl, alkylaryl, arylalkyl, fluoroalkyl or fluoroaryl, each having from 1 to 10 carbon atoms in the alkyl radical and from 6 to 20 carbon atoms in the aryl radical and
the radixals X are identical or different,
R¹⁷ to R²¹ are hydrogen, C₁-C₁₀-alkyl, 5- to 7-membered cycloalkyl which may in turn bear C₁-C₁₀-alkyl groups as substituents, C₆-C₁₅-aryl or arylalkyl, where two adjacent radicals may together form a saturated or unsaturated cyclic group having from 4 to 15 carbon atoms, or Si(R²⁴)₃ where
R²⁴ is C₁-C₁₀-alkyl, C₃-C₁₀-cycloalkyl or C₆-C₁₅-aryl and
Z is 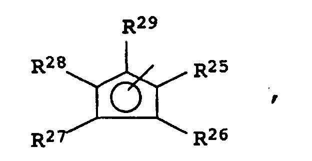
where the radicals
R²⁵ to R²⁹ are hydrogen, C₁-C₁₀-alkyl, 5- to 7-membered cycloalkyl which may in turn bear C₁-C₁₀-alkyl groups as substituents, C₆-C₁₅-aryl or arylalkyl, where two adjacent radicals may together form a saturated or unsaturated cyclic group having from 4 to 15 carbon atoms, or Si(R³⁰)₃ where
R³⁰ is C₁-C₁₀-alkyl, C₃-C₁₀-cycloalkyl or C₆-C₁₅-aryl,
or the radicals R²⁰ and Z together form an -R³¹-A- group where
R³¹ is 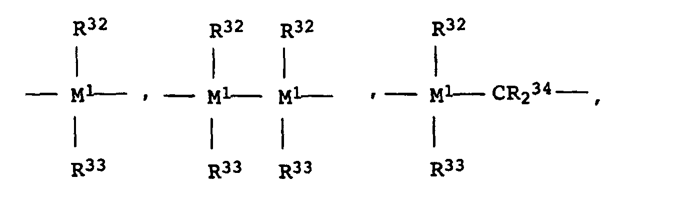 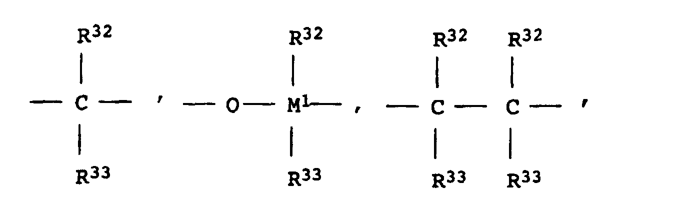 = BR³², = AlR³², -Ge-, -Sn-, -O-, -S-, = SO,
= SO₂, = NR³², = CO, = PR³² or = P(O)R³²,
where
R³², R³³ and R³⁴ are identical or different and are each a hydrogen atom, a halogen atom, a C₁-C₁₀-alkyl group, a C₁-C₁₀-fluoroalkyl group, a C₆-C₁₀-fluoroaryl group, a C₆-C₁₀-aryl group, a C₁-C₁₀-alkoxy group, a C₂-C₁₀-alkenyl group, a C₇-C₄₀-arylalkyl group, a C₈-C₄₀-arylalkenyl group or a C₇-C₄₀-alkylaryl group or two adjacent radicals together with the atoms connecting them form a saturated or unsaturated ring having from 4 to 15 carbon atoms, and
M¹ is silicon, germanium or tin,
A is ―O―, ―S― , 〉NR³⁵ or 〉PR³⁵,
where
R³⁵ is C₁-C₁₀-alkyl, C₆-C₁₅-aryl, C₃-C₁₀-cycloalkyl, C₇-C₁₈-alkylaryl or Si(R³⁶)₃, where
R³⁶ is hydrogen, C₁-C₁₀-alkyl, C₆-C₁₅-aryl which may in turn bear C₁-C₄-alkyl groups as substituents or C₃-C₁₀-cycloalkyl,
or the radicals R²⁰ and R²⁸ together form an -R³¹- group
and
C) is at least one compound capable of forming metallocenium ions.

2. A supported catalyst as claimed in claim 1, wherein the monomer units III are compounds of the formula (IIIa), 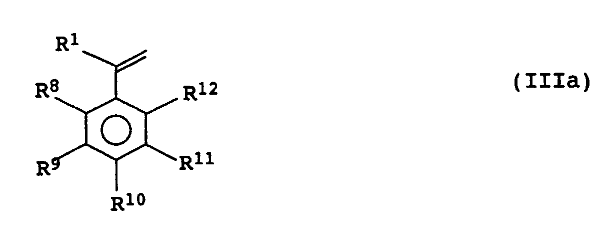 where
R⁸ to R¹² are hydrogen, C₁-C₁₀-alkyl, 5- to 7-membered cycloalkyl which may in turn bear C₁-C₁₀-alkyl groups as substituents, C₆-C₁₅-aryl or arylalkyl, or
the radicals may together with adjacent radicals in each case form a saturated or unsaturated ring having from 5 to 15 carbon atoms,
but at least one radical R⁸ to R¹² is a group of the formula (IV), 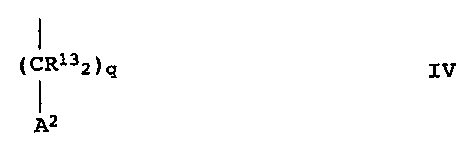 where
R¹³ are identical or different and are each hydrogen, C₁-C₁₀-alkyl or substituted or unsubstituted phenyl,
q is an integer from 0 to 8 and
A² is a group OR¹⁴, NR¹⁴R¹⁵, PR¹⁴R¹⁵, CN, COOR¹⁴ or (O-(CH₂)_{q'})_{q''}-OR¹⁴, where R¹⁴ and R¹⁵ are identical or different and are each hydrogen or C₁-C₄-alkyl and q' is an integer from 1 to 5 and q'' is an integer from 1 to 8,
or the monomer units III are compounds of the formula (IIIb), 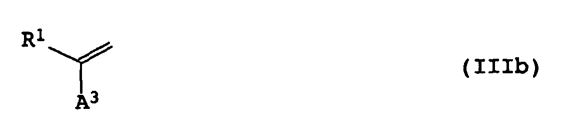 where
A³ is COOR¹⁶ or CN, where
R¹⁶ is hydrogen or C₁-C₁₀-alkyl.

3. A supported catalyst as claimed in claim 1 or 2, wherein the copolymer A) is crosslinked via the monomer units II.

4. A supported catalyst as claimed in any of claims 1 to 3 which further comprises, as additional component D), one or more metal compounds which are different from C) and have the formula (X)
M³ (R³⁸)ᵣ (R³⁹)ₛ (R⁴⁰)ₜ (X)
where
M³ is an alkali metal, an alkaline earth metal or a metal of main group III of the Periodic Table, i.e. boron, aluminum, gallium, indium or thallium,
R³⁸ is hydrogen, C₁-C₁₀-alkyl, C₆-C₁₅-aryl, alkylaryl or arylalkyl each having from 1 to 10 carbon atoms in the alkyl radical and from 6 to 20 carbon atoms in the aryl radical,
R³⁹ and R⁴⁰ are hydrogen, halogen, C₁-C₁₀-alkyl, C₆-C₁₅-aryl, alkylaryl, arylalkyl or alkoxy each having from 1 to 10 carbon atoms in the alkyl part and from 6 to 20 carbon atoms in the aryl part,
r is an integer from 1 to 3
and
s and t are integers from 0 to 2, where the sum r+s+t corresponds to the valence of M³.

5. A supported catalyst as claimed in claim 4, wherein the copolymer A) serving as support material has been pretreated with compounds of the formula (X) prior to application of metallocene complex B) and compound C) capable of forming metallocenium ions.

6. A process for preparing supported catalysts as claimed in any of claims 1 to 5, which comprises preparing copolymers comprising the monomer units I, II and III in solution or dissolving the copolymers in a suitable solvent after they have been prepared and adding the metallocene complex B) and the compound C) capable of forming metallocenium ions to this solution.

7. A process for preparing supported catalysts as claimed in claim 6, wherein the copolymer A) is crosslinked at from 0 to 150°C by means of a Diels-Alder reaction either before or after the addition of metallocene complex B) and compound C) capable of forming metallocenium ions.

8. A process for preparing supported catalysts as claimed in claim 6 or 7, wherein the copolymer A) is pretreated with compounds of the formula (X) prior to the addition of metallocene complex B) and compound C) capable of forming metallocenium ions.

9. A copolymer which comprises the monomer units I, II and IIIa and is suitable as support material for catalysts for the polymerization of olefins.

10. A process for the polymerization of olefins in the presence of a supported catalyst as claimed in any of claims 1 to 5.

## Revendications

1. Catalyseur supporté pour la polymérisation d'oléfines, contenant
A) en tant que matériau support, un copolymère d'au moins les motifs monomères I, II et III,
les motifs monomères I étant ceux de formule générale (I) et les motifs monomères II étant ceux de formule générale (II) 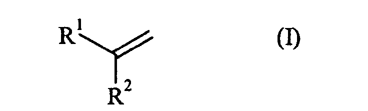 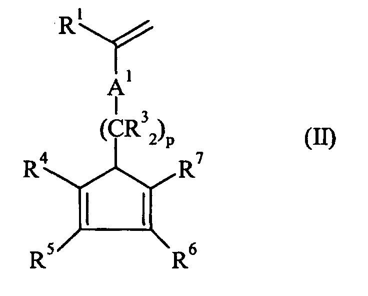 dans lesquelles les variables ont les significations suivantes :
R¹ est un atome d'hydrogène ou un groupe alkyle en C₁-C₄ ou phényle,
R² est un groupe aryle substitué ou non substitué, ou alkyle ou alcényle à chaîne droite ou ramifiée,
A¹ est une liaison chimique directe, ou un groupe phénylène substitué ou non substitué,
R³ représente des radicaux identiques ou différents hydrogène, alkyle en C₁-C₁₀, ou phényle substitué ou non substitué,
P est un nombre entier de 0 à 8, et
R⁴ à R⁷ sont des atomes d'hydrogène, des groupes alkyle en C₁-C₁₀ ou phényle substitué ou non substitué,
et les motifs monomères III comportent des groupes polaires,
et aussi
B) au moins un complexe métallocène de formule générale (V) 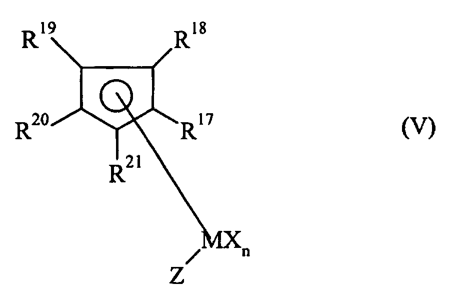 dans laquelle les substituants et les indices ont les significations suivantes :
M est le titane, le zirconium, le hafnium, le vanadium, le niobium, le tantale ou le chrome, ainsi que les éléments du IIIème Groupe Secondaire du Tableau Périodique, et les éléments des lanthanides,
X est un groupe fluoro, chloro, bromo, iodo, un atome d'hydrogène, un groupe alkyle en C₁-C₁₀, aryle en C₆-C₁₅, alkylaryle ayant de 1 à 10 atomes de carbone dans le fragment alkyle et de 6 à 20 atomes de carbone dans le fragment aryle, -OR²² ou -NR²²R²³,
n vaut 1, 2 ou 3, n correspondant à la valence de M diminuée du nombre 2,
où
R²² et R²³ sont des groupes alkyle en C₁-C₁₀, aryle en C₆-C₁₅, alkylaryle, arylalkyle, fluoralkyle ou fluoraryle ayant chacun de 1 à 10 atomes de carbone dans le fragment alkyle et de 6 à 20 atomes de carbone dans le fragment aryle, et
les radicaux X sont identiques ou différents,
R¹⁷ à R²¹ sont des atomes d'hydrogène, des groupes alkyle en C₁-C₁₀, cycloalkyle à 5 à 7 chaînons, qui pour leur part peuvent être substitués par des substituants alkyle en C₁-C₁₀ ; aryle ou arylalkyle en C₆-C₁₅, auquel cas deux radicaux voisins peuvent ensemble former des groupes cycliques saturés ou insaturés ayant de 4 à 15 atomes de carbone, ou encore Si(R²⁴)₃, où
R²⁴ peut être un groupe alkyle en C₁-C₁₀, cycloalkyle en C₃-C₁₀ ou aryle en C₆-C₁₅, et
Z est 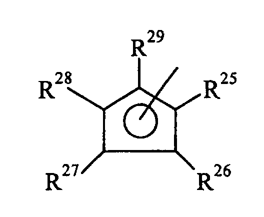 et
les radicaux R²⁵ à R²⁹ sont chacun un atome d'hydrogène, un groupe alkyle en C₁-C₁₀, cycloalkyle à 5 à 7 chaînons pouvant pour sa part être substitué par des substituants alkyle en C₁-C₁₀ ; aryle ou arylalkyle en C₆-C₁₅, auquel cas aussi deux radicaux voisins peuvent former ensemble des groupes cycliques saturés ou insaturés ayant de 4 à 15 atomes de carbone, ou encore Si(R³⁰)₃, où
R³⁰ est un groupe alkyle en C₁-C₁₀, cycloalkyle en C₃-C₁₀ ou aryle en C₆-C₁₅,
ou encore les radicaux R²⁰ et Z forment ensemble un groupement -R³¹-A-, dans lequel
R³¹ est 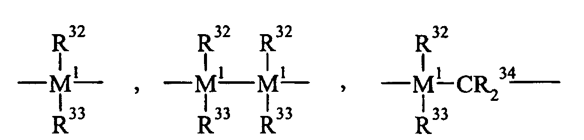 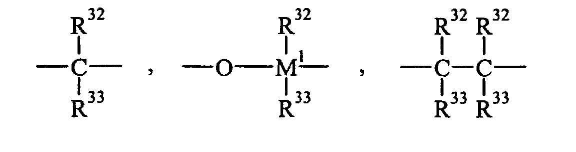 =BR³², =AlR³², -Ge-, -Sn-, -O-, -S-, =SO, =SO₂, =NR³², =CO, =PR³² ou
=P(O)R³²,
où
R³², R³³ et R³⁴ sont identiques ou différents et représentent chacun un atome d'hydrogène, un atome d'halogène, un groupe alkyle en C₁-C₁₀, un groupe fluoralkyle en C₁-C₁₀, un groupe fluoraryle en C₆-C₁₀, un groupe aryle en C₆-C₁₀, un groupe alcoxy en C₁-C₁₀, un groupe alcényle en C₂-C₁₀, un groupe arylalkyle en C₇-C₄₀, un groupe arylalcényle en C₈-C₄₀ ou un groupe alkylaryle en C₇-C₄₀, ou encore deux radicaux voisins forment, avec les atomes qui les relient, un cycle saturé ou insaturé ayant de 4 à 15 atomes de carbone, et
M¹ est le silicium, le germanium ou l'étain,
A est -O-, -S-, >NR³⁵ ou >PR³⁵,
R³⁵ est un groupe alkyle en C₁-C₁₀, aryle en C₆-C₁₅, cycloalkyle en C₃-C₁₀, alkylaryle en C₇-C₁₈ ou Si(R³⁶)₃,
R³⁶ est un atome d'hydrogène, un groupe alkyle en C₁-C₁₀, aryle en C₆-C₁₅, qui pour sa part peut être substitué par des groupes alkyle en C₁-C₄, ou encore cycloalkyle en C₃-C₁₀,
ou encore les radicaux R²⁰ et R²⁸ forment ensemble un groupement -R³¹-, et
C) au moins un composé formant des ions métallocénium.

2. Catalyseur supporté selon la revendication 1, dans lequel les motifs monomères III sont des composés de formule générale (IIIa) 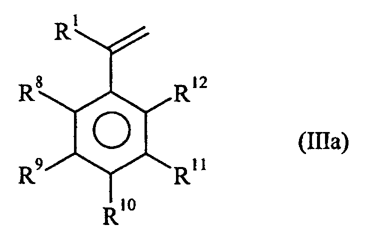 dans laquelle
R⁸ à R¹² peuvent être chacun un atome d'hydrogène, un groupe alkyle en C₁-C₁₀, cycloalkyle à 5 à 7 chaînons, qui pour sa part peut être substitué par des substituants alkyle en C₁-C₁₀ ; aryle ou arylalkyle en C₆-C₁₅, ou encore les radicaux peuvent, avec des radicaux voisins, former un cycle saturé ou insaturé ayant de 5 à 15 atomes de carbone,
auquel cas cependant au moins l'un des radicaux R⁸ à R¹² est un groupe de formule générale (IV) 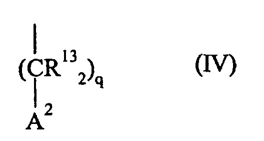 dans laquelle
R¹³ sont des radicaux identiques ou différents et représentent chacun un atome d'hydrogène, un groupe alkyle en C₁-C₁₀ ou phényle substitué ou non substitué,
q est un nombre entier de 0 à 8, et
A² est un groupe OR¹⁴, NR¹⁴R¹⁵, PR¹⁴R¹⁵, CN, COOR¹⁴ ou (O-(CH₂)_{q'})_{q"}-OR¹⁴, R¹⁴ et R¹⁵ étant identiques ou différents et représentant chacun un atome d'hydrogène ou un groupe alkyle en C₁-C₄, et q' est un nombre entier de 1 à 5, et q" est un nombre entier de 1 à 8,
ou encore les motifs monomères III sont des composés de formule générale (IIIb) 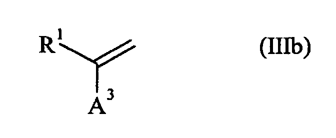 dans laquelle
A³ est COOR¹⁶ ou CN,
R¹⁶ étant un atome d'hydrogène ou un groupe alkyle en C₁-C₁₀.

3. Catalyseur supporté selon la revendication 1 ou 2, dans lequel le copolymère A) est réticulé par l'intermédiaire des motifs monomères II.

4. Catalyseur supporté selon les revendications 1 à 3, contenant en tant qu'autre composant D), et en outre, un ou plusieurs composés métalliques différents de C), de formule générale (X)
M³ (R³⁸)ᵣ (R³⁹)ₛ (R⁴⁰)ₜ (X)
dans laquelle
M³ est un métal alcalin ou alcalino-terreux ou un métal du IIIème Groupe Principal du Tableau Périodique, à savoir le bore, l'aluminium, le gallium, l'indium ou le thallium,
R³⁸ est un atome d'hydrogène, un groupe alkyle en C₁-C₁₀, aryle en C₆-C₁₅, alkylaryle ou arylalkyle ayant chacun de 1 à 10 atomes de carbone dans le fragment alkyle et 6 à 20 atomes de carbone dans le fragment aryle,
R³⁹ et R⁴⁰ sont chacun un atome d'hydrogène ou d'halogène, un groupe alkyle en C₁-C₁₀, aryle en C₆-C₁₅, alkylaryle, arylalkyle ou alcoxy ayant chacun de 1 à 10 atomes de carbone dans le fragment alkyle et 6 à 20 atomes de carbone dans le fragment aryle,
r est un nombre entier de 1 à 3,
et
s et t sont des nombres entiers de 0 à 2, la somme r+s+t correspondant à la valence de M³.

5. Catalyseur supporté selon la revendication 4, dans lequel le copolymère A) servant de matériau support a été, avant application du complexe métallocène B) et du composé C) formant des ions métallocénium, traité au préalable par des composés de formule générale (X).

6. Procédé de préparation de catalyseurs supportés selon les revendications 1 à 5, **caractérisé en ce qu'**on prépare en solution des copolymères contenant les motifs monomères I, II et III, ou encore, après la préparation, on les dissout dans un solvant approprié, et on ajoute à cette solution le complexe métallocène B) et le composé formant des ions métallocénium C).

7. Procédé de préparation de catalyseurs supportés selon la revendication 6, **caractérisé en ce que**, avant ou après l'addition du complexe métallocène B) et du composé formant des ions métallocénium C), on réticule le copolymère A) par une réaction de Diels-Alder à des températures de 0 à 150°C.

8. Procédé de préparation de catalyseurs supportés selon la revendication 6 ou 7, **caractérisé en ce que**, avant l'addition du complexe métallocène B) et du composé formant des ions métallocénium C), on soumet le copolymère A) à un traitement préalable avec des composés de formule générale (X).

9. Copolymères convenant en tant que matériau support pour des catalyseurs destinés à la polymérisation d'oléfines, contenant les motifs monomères I, II et IIIa.

10. Procédé de polymérisation d'oléfines en présence d'un catalyseur supporté selon les revendications 1 à 5.
